# EUROPEAN PATENT APPLICATION

(11) **EP 4 535 521 A1**
(43) Date of publication of application: **09.04.2025**
(21) Application number: 23815876.0
(22) Date of filing: 23.05.2023
(51) Int. Cl.: H01M 50/129, H01M 10/0562, H01M 50/105, H01M 50/121

(54) **CLADDING MATERIAL FOR ELECTRICITY STORAGE DEVICE AND ELECTRICITY STORAGE DEVICE USING SAME**

(30) Priority: 01.06.2022 JP 2022089597
(71) Applicant: Toppan Holdings Inc., Tokyo 110-0016 (JP)
(72) Inventor: IMAMOTO Junya, Tokyo 110-0016 (JP)
(74) Representative: Hoffmann Eitle
(86) International application number: PCT/JP2023/019130
(87) International publication number: WO 2023/234117

(57) **Abstract**

A packaging material for a power storage device according to an aspect of the present disclosure includes at least a substrate layer, a barrier layer, and a sealant layer in this order, in which the sealant layer contains a polypropylene resin (A) and an incompatible component (B) that is incompatible with the polypropylene resin, and, when a cross section of the sealant layer taken along a TD direction is observed, an area proportion S1 of the incompatible component (B) in the cross section is 10 to 50%.

## Description

### [Technical Field]

The present disclosure relates to a packaging material for a power storage device, and a power storage device which uses the same.

### [Background Art]

Power storage devices include, for example, secondary batteries, such as lithium-ion batteries, nickel hydride batteries, and lead batteries, and electrochemical capacitors, such as electric double layer capacitors. Due to miniaturization of mobile devices, limitation of installation spaces, or the like, power storage devices are required to be further miniaturized, and thus attention is being given to lithium-ion batteries for their high energy density. The conventional packaging materials for lithium-ion batteries have been metal cans. However, multilayer films have been increasingly used due to their light weight, high heat dissipation, and low production cost.

lithium-ion batteries having packaging materials formed of such multilayer films are referred to as laminated lithium-ion batteries. The packaging material covers the battery contents (such as the positive electrode, separator, negative electrode, and electrolyte solution) to prevent water from entering inside. A laminated lithium-ion battery is produced by, for example, forming a recess for accommodating the battery contents in a portion of the packaging material by cold forming, folding the remaining part of the packaging material, and sealing the edge portions by heat sealing (see, for example, PTL 1).

### [Citation List]

### [Patent Literature]

[PTL 1] JP 2013-101765 A

### [Summary of the Invention]

### [Technical Problem]

As a next-generation lithium-ion battery, research and development into a power storage device called a solid-state battery is being performed. Solid-state batteries are operated under pressure to increase the conductivity of the battery elements. For efficient battery operation, uniform pressure should be applied to the battery elements.

On the other hand, in the battery manufacturing process, the sealant layer may be damaged when the packaging material is transported between rolls. If the sealant layer is damaged, pressure will not be applied uniformly to the battery elements, reducing the operating efficiency of the battery. In other words, the packaging material is required to have good scratch resistance.

The present disclosure relates to a packaging material for a power storage device that has good scratch resistance, and a power storage device which uses the same.

### [Solution to Problem]

An aspect of the present disclosure provides a packaging material for a power storage device including at least a substrate layer, a barrier layer, and a sealant layer in this order, characterized in that the sealant layer contains a polypropylene resin (A) and an incompatible component (B) that is incompatible with the polypropylene resin, and, when a cross section of the sealant layer taken along a TD direction is observed, an area proportion S1 of the incompatible component (B) in the cross section is 10 to 50%.

The packaging material has good scratch resistance. The inventors consider that the reason for which such an effect is achieved is as follows. That is, the sealant layer of this packaging material contains a polypropylene resin (A) and an incompatible component (B). The incompatible component (B) serves to alleviate the stress applied to the packaging material. In order to ensure alleviate stress and ensure good scratch resistance, it is necessary to distribute the stress appropriately. Since the area proportion S1 is 10% or more, the incompatible component (B) alleviates stress sufficiently, which suppresses the occurrence of scratches in the sealant layer. Since the area proportion S1 is 50% or less, the stress applied to the packaging material is suppressed from rebounding and damaging the sealant layer. As a result, the packaging material has good scratch resistance.

A common method for improving scratch resistance is to harden the sealant layer by adding a nucleating agent to the sealant layer. However, this reduces sealing strength. The above-described packaging material has good scratch resistance even when the sealant layer does not contain a nucleating agent.

When a cross section of the sealant layer taken along an MD direction is observed, an area proportion S2 of the incompatible component (B) in the cross section may be 10 to 40%. Since the area proportion S2 is 10% or more, the incompatible component (B) alleviates stress even more sufficiently. In addition, since the area proportion S2 is 40% or less, the stress applied to the packaging material is better suppressed from rebounding and damaging the sealant layer. As a result, the packaging material tends to have an even better scratch resistance.

In one mode, the ratio S1/S2 of the area proportion S1 to the area proportion S2 may be greater than 1. The sealant layer of the packaging material is damaged by the stress applied from the rolls during roll transport, and this stress is applied in the TD direction. When S1/S2 is greater than 1, stress is alleviated more efficiently. As a result, the packaging material tends to have an even better scratch resistance.

In one mode, the packaging material may further include an adhesive resin layer between the barrier layer and the sealant layer, characterized in that the adhesive resin layer contains a polypropylene resin (A) and an incompatible component (B) that is incompatible with the polypropylene resin, and, when a cross section of the adhesive resin layer taken along the TD direction is observed, an area proportion S3 of the incompatible component (B) in the cross section is 20 to 70%. Since the adhesive resin layer contains the polypropylene resin (A) and the incompatible component (B), the incompatible component (B) serves to alleviate the stress applied to the packaging material. Since the area proportion S3 is 20% or more, the incompatible component (B) alleviates stress sufficiently. Further, since the area proportion S3 is 70% or less, the stress applied to the packaging material is suppressed from rebounding and damaging the sealant layer. As a result, the packaging material tends to have an even better scratch resistance.

In one mode, when a cross section of the adhesive resin layer taken along an MD direction is observed, the area proportion S4 of the incompatible component (B) in the cross section may be 20 to 60%. Since the area proportion S4 is 20% or more, the incompatible component (B) alleviates stress even more sufficiently. In addition, since the area proportion S4 is 60% or less, the stress applied to the packaging material is suppressed from rebounding and damaging the sealant layer even better. As a result, the packaging material tends to have an even better scratch resistance.

In one mode, the ratio S3/S4 of the area proportion S3 to the area proportion S4 may be greater than 1. The sealant layer of the packaging material is damaged by the stress applied from the rolls during roll transport, and this stress is applied in the TD direction. When S3/S4 is greater than 1, stress is alleviated more efficiently. As a result, the packaging material tends to have an even better scratch resistance.

In one mode, the ratio S3/S1 of the area proportion S3 to the area proportion S1 may be greater than 1. Since S3/S1 is greater than 1, the incompatible component (B) (island component) is more abundant in the interior (adhesive resin) than at the origin of stress (sealant side). This results in even better stress alleviation and less stress rebound. Therefore, the packaging material tends to have an even better scratch resistance.

In one mode, the sealant layer may be thicker than the adhesive resin layer. This promotes the distribution of stress by the packaging material, and the packaging material tends to have better scratch resistance. In one mode, the incompatible component (B) may include a polyethylene component. As a result, the packaging material tends to have better scratch resistance. In one mode, the packaging material may be for a solid-state battery.

Another aspect of the present disclosure may be a power storage device including a power storage device body, and the above-described packaging material that houses the power storage device body. In one mode, the power storage device may be a solid-state battery.

### [Advantageous Effects of the Invention]

According to the present disclosure, a packaging material for a power storage device that has good scratch resistance, and a power storage device which uses the same are provided.

### [Brief Description of the Drawings]

Fig. 1 is a schematic cross-sectional view of a packaging material according to an embodiment of the present disclosure.
Fig. 2 is a schematic view of a cross section of a sealant layer of the packaging material according to an embodiment of the present disclosure taken along a TD direction.
Fig. 3 is a schematic view of a cross section of a sealant layer of the packaging material according to an embodiment of the present disclosure taken along an MD direction.
Fig. 4 is a schematic cross-sectional view of a packaging material according to an embodiment of the present disclosure.
Fig. 5 is a perspective view of a power storage device according to an embodiment of the present disclosure.

### [Description of the Embodiments]

The preferred embodiments of the present disclosure will now be described in detail with reference to the drawings as appropriate. Throughout the drawings, the same or corresponding components are denoted by the same reference signs, and duplicated description is omitted. Further, the dimensional ratios of the drawings are not limited to those as illustrated.

### [Power storage device packaging material]

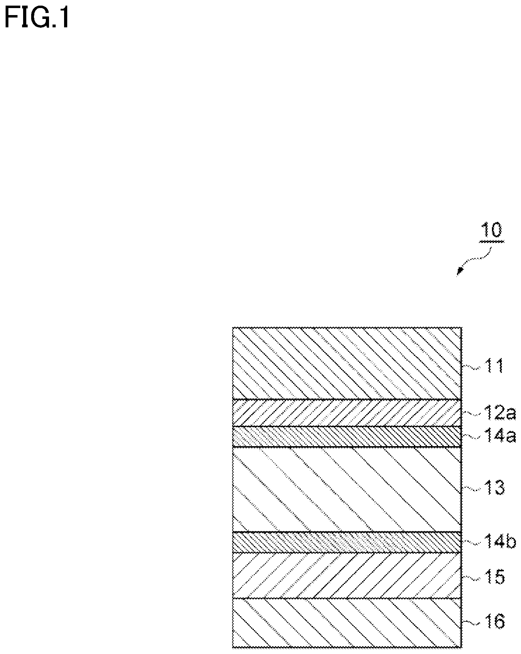

Fig.1 is a schematic cross-sectional view of an embodiment of a power storage device packaging material of the present disclosure. As shown in Fig. 1, a packaging material (packaging material for a power storage device) 10 according to the present embodiment is a laminate including a substrate layer 11, a first adhesive layer 12a provided on a surface of the substrate layer 11, a barrier layer 13 provided on the side of the first adhesive layer 12a opposite to the substrate layer 11 and having an anticorrosion treatment layer on both surfaces thereof (first anticorrosion treatment layer 14a and second anticorrosion treatment layer 14b), an adhesive resin layer 15 provided on the side of the barrier layer 13 opposite to the adhesive layer 12a, and a sealant layer 16 provided on the side of the adhesive resin layer 15 opposite to the barrier layer 13, which are laminated in this order. The first anticorrosion treatment layer 14a is provided on the surface of the barrier layer 13 facing the substrate layer 11, and the second anticorrosion treatment layer 14b is provided on the surface of the barrier layer 13 facing the sealant layer 16. In the packaging material 10, the substrate layer 11 is the outermost layer and the sealant layer 16 is the innermost layer. That is, the packaging material 10 is used with the substrate layer 11 facing toward the outside of the power storage device and the sealant layer 16 facing toward the inside of the power storage device.

In the following, the layers configuring the packaging material 10 will be specifically described.

### <Substrate layer 11>

The substrate layer 11 imparts heat resistance in a sealing process in the production of power storage devices, and suppresses the formation of pinholes that may occur during molding or distribution. Particularly in the case of packaging materials for large power storage devices, scratch resistance, chemical resistance, insulating properties, and the like, can also be imparted.

The substrate layer 11 is preferably a layer formed of a resin having insulating properties. Examples of such resins include polyester resin, polyamide resin, polyimide resin, polyamideimide resin, polyether ketone resin, polyphenylene sulfide resin, polyetherimide resin, polysulfone resin, fluororesin, phenol resin, melamine resin, urethane resin, allyl resin, silicone resin, epoxy resin, furan resin, and acetyl cellulose resin.

When these resins are applied to the substrate layer 11, they may be in the form of a stretched or unstretched film, or in the form of a coating. The substrate layer 11 may have a single layer structure or a multilayer structure, and different resins may be used in combination in the case of a multilayer structure. In the case of a film, it may be co-extruded, or laminated using an adhesive. In the case of a coating, it may be obtained by being coated the same number of times a layer is added. The multilayer structure may also be a combination of films and coatings.

Among these resins, polyester resin and polyamide resin are preferable as materials for forming the substrate layer 11 because of they have good formability. Examples of polyester resins include polyethylene terephthalate, polybutylene terephthalate, and polyethylene naphthalate. Examples of polyamide resins include Nylon-6, Nylon-6,6, a copolymer of Nylon-6 and Nylon-6,6, Nylon-6, Nylon-9T, Nylon-10, polymetaxylylene adipamide (MXD6), Nylon-11, and Nylon-12.

When these resins are used in the form of a film, it is preferable that the film is a biaxially stretched film. The stretching methods used for the biaxially stretched film include, for example, sequential biaxial stretching, tubular biaxial stretching, simultaneous biaxial stretching, and the like. From the perspective of obtaining better deep drawing formability, the biaxially stretched film is preferably stretched using a tubular biaxial stretching method.

The thickness of the substrate layer 11 is preferably 6 to 100 µm, more preferably 10 to 75 µm, and even more preferably 10 to 50 µm. The substrate layer 11, when having a thickness of 6 µm or more, tends to improve pinhole resistance and insulation properties of the power storage device packaging material 10. When the thickness of the substrate layer 11 is 50 µm or less, the total thickness of the packaging material 10 tends to be small.

The substrate layer 11 is also preferred to have a peak melting temperature higher than that of the sealant layer 16. When the sealant layer 16 has a multilayer structure, the melting peak temperature of the sealant layer 16 indicates the melting peak temperature of the layer having the highest melting peak temperature. Since the substrate layer 11 has a melting peak temperature higher than that of the sealant layer 16, it is possible to prevent the appearance from deteriorating by the substrate layer 11 (outer layer) melting during heat sealing.

The melting peak temperature of the substrate layer 11 is preferably equal to or higher than 290°C, more preferably within the range of 290 to 350°C. Examples of resin films that can be used as the substrate layer 11 and have a melting peak temperature in the above range include nylon film, polyester film such as PET film, polyamide film, and polyphenylene sulfide film (PPS film). A commercially available film may be used as the substrate layer 11, or alternatively the substrate layer 11 may be formed by coating (applying a coating liquid and drying it). The substrate layer 11 may have a single-layer structure or a multilayer structure, and it may be formed by applying a thermosetting resin. Further, the substrate layer 11 may contain, for example, various additives (e.g., flame retarders, slip agents, antiblocking agents, antioxidants, light stabilizers, tackifiers, and the like).

The difference (T₁₁ - T₁₆) between the melting peak temperature T₁₁ of the substrate layer 11 and the melting peak temperature T₁₆ of the sealant layer 16 is preferably equal to or greater than 20°C. When this temperature difference is equal to or greater than 20°C, it is possible to further reduce the deterioration in the appearance of the packaging material 10 due to heat sealing.

### <First adhesive layer 12a>

The first adhesive layer 12a bonds the substrate layer 11 and the barrier layer 13. For example, the material used for forming the first adhesive layer 12a may be specifically a polyurethane resin prepared by reacting a bifunctional or higher functional isocyanate compound (polyfunctional isocyanate compound) with a base resin such as a polyester polyol, polyether polyol, acrylic polyol, carbonate polyol, or the like. These various polyols can be used alone or in combination of two or more, according to the functions and performance sought in the packaging material 10. In addition to the above examples, a material containing an epoxy resin as the base resin and a hardener may also be used, but it is not limited to this.

The first adhesive layer 12a is formed using an adhesive composition containing the above-mentioned base resin and a hardener. Moreover, other various additives and stabilizers may be added to the adhesive composition mentioned above depending on the performance required of the adhesive layer.

The adhesive composition preferably contains, as the hardener, at least one polyfunctional isocyanate compound selected from the group consisting of alicyclic isocyanate multimers, and isocyanate multimers containing an aromatic ring in the molecular structure. Examples of the polyfunctional isocyanate compound include a nurate form of isophorone diisocyanate, an adduct form of tolylene diisocyanate, an adduct form of hexamethylene diisocyanate, a biuret form and a nurate form of hexamethylene diisocyanate, a biuret form and a nurate form of tolylene diisocyanate, an adduct form, a biuret form, and a nurate form of diphenylmethane diisocyanate, and an adduct form, a biuret form, and a nurate form of xylylene diisocyanate.

The hardener may be a combination of an alicyclic isocyanate multimer, and an isocyanate multimer having an aromatic ring in the molecular structure. The combined use of these multimers tends to further improve heat resistance.

To further improve heat resistance, the adhesive composition preferably contains at least one polyol selected from the group consisting of polyester polyols, acrylic polyols, and polycarbonate diols. Among these, polyester polyols are more preferred to further improve heat resistance.

In the adhesive composition, the ratio (NCO/OH) of the number of isocyanate groups in the polyfunctional isocyanate compound to the number of hydroxyl groups in the polyol may be 1.5 to 40.0, or 15.0 to 30.0. When this ratio is 1.5 or more, the hardener molecules are likely to react with each other and produce by-products such as urea resin and biuret resin. Since these by-products have active hydrogen groups, they interact with polar groups in the adjacent layers to improve interfacial adhesion, which tends to improve heat resistance. On the other hand, when the ratio is 40.0 or less, the laminate strength at room temperature and high temperature can be further improved.

The thickness of the first adhesive layer 12a is not particularly limited, but from the perspective of obtaining desired adhesive strength, conformability, processability and the like, for example, the thickness is preferably 1 µm to 10 µm, and more preferably 2 µm to 7 µm.

To ensure superior laminate strength at both room temperature and high temperature, and to also obtain superior deep drawing formability, the mass per unit area of the first adhesive layer 12a may be 2.0 to 6.0 g/m², 2.5 to 5.0 g/m², or 3.0 to 4.0 g/m².

### <Barrier layer 13>

The barrier layer 13 has water vapor barrier properties to prevent moisture from infiltrating into the power storage device. Further, the barrier layer 13 may have ductility for undergoing deep drawing. Examples of the barrier layer 13 include foils of various metals such as aluminum, stainless steel, and copper, or metal vapor deposition films, inorganic oxide vapor deposition films, carbon-containing inorganic oxide vapor deposition films, and films provided with these vapor deposition films. Examples of the film provided with a vapor deposition film include an aluminum vapor deposition film and an inorganic oxide vapor deposition film. These can be used singly or in combination of two or more. The barrier layer 13 is preferably made of a metal foil in view of mass (specific gravity), moisture resistance, processability, and cost, more preferably an aluminum foil.

The aluminum foil may be a soft aluminum foil, particularly one subjected to an annealing treatment , and more preferably an aluminum foil containing iron (aluminum alloy film) may be used for the purpose of further imparting pinhole resistance and ductility at the time of forming. The iron content in the aluminum foil is preferably 0.1 mass% to 9.0 mass% relative to 100 mass% of aluminum foil, and more preferably 0.5 mass% to 2.0 mass%. An iron content of 0.1 mass% or more leads to a packaging material 10 having better pinhole resistance, and ductility and malleability. When the iron content is 9.0 mass % or less, the packaging material 10 can have even greater flexibility. Untreated aluminum foil can be used as the aluminum foil, but aluminum foil that has been subjected to a degreasing treatment is used preferably in order to impart corrosion resistance. When the aluminum foil is degreased, only one surface of the aluminum foil may be degreased, or both surfaces may be degreased.

The thickness of the barrier layer 13 is not particularly limited, but is preferably 9 µm to 200 µm, and more preferably 15 µm to 100 µm, in terms of barrier properties, pinhole resistance and processability.

### <First and second anticorrosion treatment layer 14a and 14b>

The first and second anticorrosion treatment layers 14a and 14b are layers provided to prevent corrosion of the metal foil (metal foil layer) or the like forming the barrier layer 13. The first anticorrosion treatment layer 14a increases the adhesive force between the barrier layer 13 and the first adhesive layer 12a. The second anticorrosion treatment layer 14b increases the adhesive force between the barrier layer 13 and the adhesive resin layer 15. The first and second anticorrosion treatment layers 14a and 14b may have the same configuration or different configurations. The first and second anticorrosion treatment layers 14a and 14b (hereinafter also simply referred to as "anticorrosion treatment layer 14a and 14b") is formed by, for example, degreasing treatment, hydrothermal modification treatment, anodic oxidation treatment, chemical conversion treatment, or a combination of these treatments.

Examples of the degreasing treatment include acid degreasing treatment and alkaline degreasing treatment. The acid degreasing may be a method using an inorganic acid such as sulfuric acid, nitric acid, hydrochloric acid or hydrofluoric acid alone, or a mixture of these acids. The acid degreasing may include use of an acid degreasing agent obtained by dissolving a fluorine-containing compound such as monosodium ammonium difluoride with the aforementioned inorganic acid , and specifically, when an aluminum foil is used as the barrier layer 13, use of this acid degreasing agent is effective in terms of corrosion resistance, for its contribution to forming a fluoride of aluminum in a passive state, in addition to obtaining the effect of degreasing aluminum. The alkaline degreasing may be a method using sodium hydroxide or the like.

For example, the hydrothermal modification treatment may be a boehmite treatment of immersion-treating an aluminum foil in boiling water to which triethanolamine has been added. For example, the anodic oxidation treatment may be an alumite treatment.

The chemical conversion treatment may be of an immersion type or a coating type. The immersion type chemical conversion treatment may be, for example, chromate treatment, zirconium treatment, titanium treatment, vanadium treatment, molybdenum treatment, calcium phosphate treatment, strontium hydroxide treatment, cerium treatment, ruthenium treatment, or various chemical conversion treatments of mixed phases thereof. The coating type chemical conversion treatment may be a method of applying a coating agent having an anticorrosion performance onto the barrier layer 13.

Of these anticorrosion treatments, if at least part of the anticorrosion treatment layer is formed by any of hydrothermal modification treatment, anodization and chemical conversion treatment, degreasing treatment is preferably performed in advance. If a degreased metal foil, such as an annealed metal foil, is used as the barrier layer 13, the degreasing treatment is not necessary in forming the anticorrosion treatment layers 14a and 14b.

The coating agent used for the coating type chemical conversion treatment preferably contains trivalent chromium. The coating agent may contain at least one polymer selected from the group consisting of a cationic polymer and an anionic polymer to be described later.

Of the treatments mentioned above, the hydrothermal modification treatment and the anodic oxidation treatment, in particular, dissolve the surface of an aluminum foil with a treatment agent and form an aluminum compound having good corrosion resistance (such as boehmite or alumite). Thus, these treatments, which form a co-continuous structure from the barrier layer 13 of an aluminum foil to the anticorrosion treatment layers 14a and 14b, are encompassed by the definition of a chemical conversion treatment. On the other hand, the anticorrosion treatment layers 14a and 14b can also be formed by only a pure coating method, which is not included in the definition of the chemical conversion treatment, as described later. For example, this coating method may be a method using a rare-earth oxide sol, such as cerium oxide with a mean particle size of 100 nm or less exhibiting an anticorrosion effect (inhibitor effect) for aluminum, as a material preferable in terms of environmental aspects. Use of this method makes it possible to impart an anticorrosion effect to a metal foil such as an aluminum foil even when using an ordinary coating method.

Examples of the rare-earth oxide sol include sols using various solvents such as an aqueous solvent, an alcohol solvent, a hydrocarbon solvent, a ketone solvent, an ester solvent, an ether solvent, and the like. Of these sols, an aqueous sol is preferable.

To stabilize a dispersion, the rare-earth oxide sol may contain, as a dispersion stabilizer, an inorganic acid such as nitric acid, hydrochloric acid, phosphoric acid, or the like or a salt thereof, or an organic acid such as acetic acid, malic acid, ascorbic acid, lactic acid, or the like. Of these dispersion stabilizers, phosphoric acid, in particular, is expected to impart the packaging material 10 with features of (1) stabilizing dispersion of the sol, (2) improving adhesion to the barrier layer 13 making use of an aluminum chelate ability of phosphoric acid, (3) imparting corrosion resistance by trapping aluminum ions eluted under the influence of acid or corrosive gas (passive state formation), (4) improving cohesive force of the anticorrosion treatment layers (oxide layers) 14a and 14b by readily inducing dehydration condensation of phosphoric acid even at low temperature, and the like.

Since the anticorrosion treatment layers 14a and 14b formed of the rare-earth oxide sol are an aggregate of inorganic particles, the cohesive force of the layer itself may be lowered even after being dry-cured. Therefore, the anticorrosion treatment layers 14a and 14b in this case are preferably compounded with an anionic polymer or a cationic polymer to supplement the cohesive force.

The anticorrosion treatment layers 14a and 14b are not limited to the layers mentioned above. For example, the anticorrosion treatment layers 14a and 14b may be formed using a treatment agent which is obtained by adding phosphoric acid and a chromium compound to a resin binder (such as aminophenol) as in a coating-type chromate based on known art. When this treatment agent is used, the resultant layer will have both an anticorrosion function and adhesion. Although it is necessary to consider stability of a coating solution, a coating agent may be prepared in advance by integrating a rare-earth oxide sol with a polycationic polymer or a polyanionic polymer, and using this coating agent, the anticorrosion treatment layers 14a and 14b may be formed being imparted with both the anticorrosion function and adhesion.

Regardless of having a multilayer structure or a monolayer structure, mass per unit area of the anticorrosion treatment layers 14a and 14b is preferably 0.005 g/m² to 0.200 g/m², and more preferably 0.010 g/m² to 0.100 g/m². When the mass per unit area is 0.005 g/m² or more, an anticorrosion function can be readily imparted to the barrier layer 13. Even if the mass per unit area exceeds 0.200 g/m², there is little change in the anticorrosion function. If a rare-earth oxide sol is used and if the coating film is thick, heat-curing at the time of drying may be insufficient, and may decrease the cohesive force. It should be noted that the thickness of the anticorrosion treatment layers 14a and 14b can be converted from their specific gravity.

To facilitate maintaining the adhesion between the sealant layer and the barrier layer, the anticorrosion treatment layers 14a and 14b may contain, for example, cerium oxide, 1 part by mass to 100 parts by mass of phosphoric acid or phosphate relative to 100 parts by mass of the cerium oxide, and a cationic polymer, or may be formed by applying a chemical conversion treatment to the barrier layer 13, or may contain a cationic polymer and formed by applying a chemical conversion treatment to the barrier layer 13.

### <Sealant layer 16>

The sealant layer 16 is a layer that imparts sealing properties to the packaging material 10 by heat sealing, and is a layer which is heat sealed (thermally adhered) when disposed on the inside when the power storage device is assembled. The sealant layer 16 contains a polypropylene resin (A1) (hereinafter also referred to as "(A1) component") and an incompatible component (B1) (hereinafter also referred to as "(B1) component") that is incompatible with the polypropylene resin. Not having compatibility (being incompatible) means that the (B 1) component is dispersed with a dispersed phase size of 500 nm or more and less than 20 µm in the (A1) component.

The (A1) component is a resin obtained from a polymer monomer including propylene. Examples of the (A1) component include homopolypropylene and random polypropylene, and homopolypropylene is preferable for better heat resistance. Examples of random polypropylenes include copolymers of polypropylene and an olefin other than polypropylene. Examples of olefins include ethylene, butene, and octene. One olefin or a combination of two or more olefins may be used. One (A1) component or a combination of two or more (A1) components may be used.

For better heat resistance, the melting point of the (A1) component is preferably 150 to 175°C, and more preferably 160 to 170°C.

The (B1) component may be, for example, a polyolefin component. A polyolefin component is a compound having a structure derived from olefin. Examples of polyolefin components include polyethylene components, polybutene components, and polymethylpentene components. Polyethylene components are preferable because of their stress relaxation ability. A polyethylene component is a compound having a structure derived from ethylene. A polybutene component is a compound having a structure derived from butene. A polymethylpentene component is a compound having a structure derived from methylpentene. The (B1) component may be a resin or an elastomer. The elastomer may be, for example, a polyolefin elastomer having an α-olefin as a comonomer. Examples of the (B1) component include homopolymers, graft copolymers, block copolymers, and random copolymers. These copolymers at least partially have a part that is incompatible with the (A) component. The copolymers may be a copolymer obtained by polymerizing two kinds of polymers, a terpolymer obtained by polymerizing three kinds of polymers, or a copolymer obtained by polymerizing four or more kinds of polymers.

The polyethylene component is preferably low-density polyethylene resin (LDPE), medium-density polyethylene resin (MDPE), linear low-density polyethylene resin (LLDPE), or an ethylene-α-olefin copolymer. The ethylene-α-olefin copolymer is preferably, for example, a copolymer of ethylene and propylene, a copolymer of ethylene and butene, a copolymer of ethylene and methylpentene, or a copolymer of ethylene and octene.

The content of the ethylene-derived structure in the polyethylene component may be 60 mass% or more, 70 mass% or more, 80 mass% or more, or 90 mass% or more based on the total amount of the polyethylene component.

The content of the polyolefin component in the (B1) component may be 60 mass% or more, 70 mass% or more, 80 mass% or more, or 90 mass% or more based on the total amount of the (B1) component.

The total content of the (A1) and (B1) components in the sealant layer 16 may be 70 mass% or more, 80 mass% or more, or 90 mass% or more based on the total amount of the sealant layer.

The proportion of the (A1) component in the total mass of the (A1) and (B1) components may be, for example, 70 mass% or more, 80 mass% or more, or 90 mass% or more, and may be 93 mass% or less, 95 mass %or less, or 97 mass% or less.

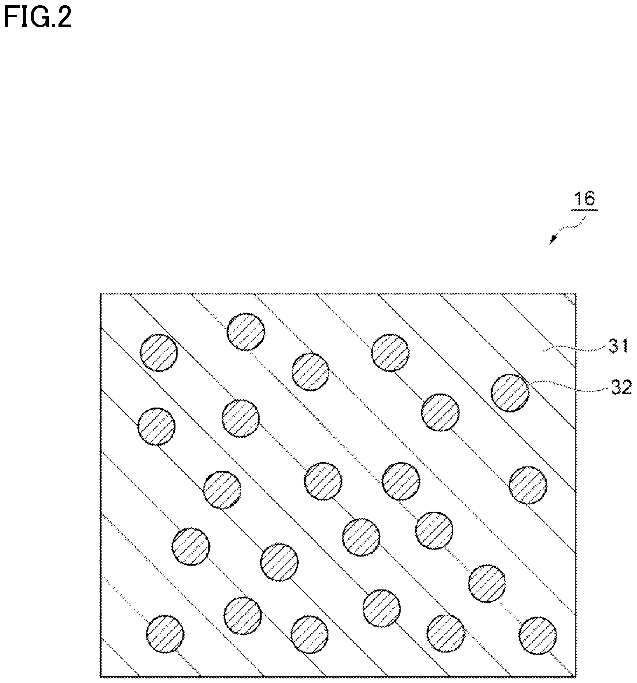

Fig. 2 is a schematic diagram of a cross section of the sealant layer 16 taken along a TD direction (a direction perpendicular to the feed direction). As shown in Fig. 2, the sealant layer 16 has a sea-island structure in which an (A1) component 31 forms the sea and a (B1) component 32 forms the islands. When a cross section of the sealant layer 16 taken along the TD direction is observed, an area proportion S1 of the (B1) component in the cross section is 10% or more. The area proportion S1 is preferably 15% or more, and more preferably 20% or more since this provides sufficient stress relaxation and further improves scratch resistance. The area proportion S1 is 50% or less. It is preferably 40% or less, and more preferably 35% or less since the sealant layer 16 tends to become harder and have further improved scratch resistance.

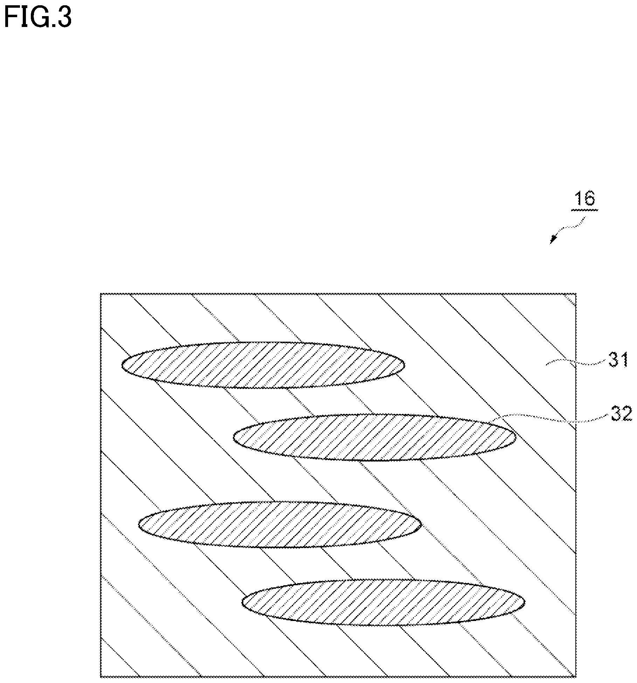

Fig. 3 is a schematic diagram of a cross section of the sealant layer 16 taken along an MD direction (the feed direction). In the cross section along the MD direction, the (B1) component 32 is extended along the MD direction as compared with that in the cross section along the TD direction. When the cross section of the sealant layer 16 taken along the MD direction is observed, an area proportion S2 of the (B1) component in the cross section is preferably 10% or more since this tends to further improve scratch resistance. The area proportion S2 is preferably 40% or less, more preferably 30% or less, and even more preferably 25% or less since this tends to further improve scratch resistance.

The ratio S1/S2 of the area proportion S1 to the area proportion S2 is preferably greater than 1, more preferably 1.1 or greater, and even more preferably 1.5 or greater since this tends to further improve scratch resistance. For the same reason, S1/S2 is preferably 5.0 or smaller, more preferably 2.5 or smaller, and even more preferably 2.0 or smaller.

The area proportions S1 and S2 can be measured by observing the cross sections along the TD and MD directions, respectively, with a scanning electron microscope (SEM), binarizing the observed images, and calculating the areas of the island and sea parts. Specifically, they can be measured by the method described in the Examples below.

The major axis of the (B1) component in the cross section along the TD direction of the sealant layer may be 0.01 µm or more, and is preferably 0.03 µm or more, and more preferably 0.05 µm or more since this tends to suppress the rebound of stress applied to the packaging material and further improve the scratch resistance. The major axis of the (B1) component in the cross section along the TD direction may be 5 µm or less, and is preferably 4 µm or less, and more preferably 3 µm or less since this tends to alleviate the stress applied to the packaging material and further improve the scratch resistance. The major axis of the (B1) component in the cross section along the TD direction is measured by observing the cross section with a scanning electron microscope.

The major axis of the (B1) component in the cross section along the MD direction of the sealant layer may be 0.2 µm or more, and is preferably 0.3 µm or more, and more preferably 0.5 µm or more since this tends to suppress the rebound of stress applied to the packaging material and further improve the scratch resistance. The major axis of the (B1) component in the cross section along the MD direction may be 15 µm or less, and is preferably 12.5 µm or less, and more preferably 10 µm or less since this tends to alleviate the stress applied to the packaging material and further improve the scratch resistance. The major axis of the (B1) component in the cross section along the MD direction is measured by observing the cross section with a scanning electron microscope.

The sealant layer 16 may contain one or more additive components, such as a slip agent, an antiblocking agent, an antioxidant, a photostabilizer, a nucleating agent, and a flame retardant. The content of these additive components is preferably not more than 5 parts by mass when the total mass of the sealant layer 16 is taken to be 100 parts by mass.

The melting peak temperature of the sealant layer 16 varies depending on the application. In the case of a packaging material for a solid-state battery, the melting peak temperature is preferably 160 to 280°C for the purpose of improving heat resistance.

The thickness of the sealant layer 16 is preferably greater than that of the adhesive resin layer 15, since this tends to further improve scratch resistance. For the same reason, the ratio of the thickness of the sealant layer 16 to the thickness of the adhesive resin layer 15 (thickness of the sealant layer 16/thickness of the adhesive resin layer 15) is preferably 1.1 or more, and more preferably 1.5 or more; for the same reason, it is preferably 10 or less, and more preferably 3 or less.

The total thickness of the sealant layer 16 and the adhesive resin layer 15 may be 15 to 300 µm, and for improved sealing and water vapor barrier performance, it is preferably 25 to 150 µm, and more preferably 50 to 100 µm.

### <Adhesive resin layer 15>

The adhesive resin layer 15 contains a polypropylene resin (A2) (hereinafter also referred to as "(A2) component") and an incompatible component (B2) (hereinafter also referred to as "(B2) component") that is incompatible with the polypropylene resin. Not having compatibility (incompatible) means that the (B2) component is dispersed with a dispersed phase size of 500 nm or more and less than 20 µm in the (A2) component.

The same material as the (A1) component may be used for the (A2) component, but it is preferable that the adhesive resin layer 15 contains an acid-modified polyolefin resin.

The acid-modified polyolefin resin may be a polyolefin resin modified with maleic anhydride, carboxylic acid, and sulfonic acid, and derivatives thereof. The acid-modified polyolefin resin may be, for example, a graft copolymer, a block copolymer, or a random copolymer. For better adhesion to the barrier layer 13, the acid-modified polyolefin resin is preferably a polyolefin resin that is grafted with maleic anhydride.

When a cross section of the adhesive resin layer 15 taken along the TD direction is observed, an area proportion S3 of the (B2) component in the cross section is preferably 20% or more, more preferably 30% or more, and even more preferably 40% or more since this tends to further improve scratch resistance. For the same reason, the area proportion S3 is preferably 70% or less, more preferably 60% or less, and even more preferably 50% or less.

When a cross section of the adhesive resin layer 15 taken along the MD direction is observed, an area proportion S4 of the (B2) component in the cross section is preferably 20% or more, and more preferably 25% or more since this tends to further improve scratch resistance. For the same reason, the area proportion S4 is preferably 60% or less, more preferably 55% or less, and even more preferably 50% or less.

The ratio S3/S4 of the area proportion S3 to the area proportion S4 is preferably greater than 1, more preferably 1.1 or greater, and even more preferably 1.2 or greater since this tends to further improve scratch resistance. For the same reason, S3/S4 is preferably 5.0 or smaller, more preferably 4.0 or smaller.

The ratio S3/S1 of the area proportion S3 to the area proportion S1 is preferably greater than 1, more preferably 1.1 or greater, and even more preferably 1.2 or greater since this tends to further improve scratch resistance. For the same reason, S3/S1 is preferably 6 or smaller, more preferably 3 or smaller.

The area proportions S3 and S4 can be measured by observing the cross sections along the TD and MD directions, respectively, with a scanning electron microscope (SEM), binarizing the observed images, and calculating the areas of the island and sea parts. Specifically, they can be measured by the method described in the Examples below.

The major axes of the (B2) component in the cross sections of the adhesive resin layer 15 taken along the TD and MD directions may be the same as the major axes of the (B1) component in the cross sections of the sealant layer taken along the TD and MD directions. The major axes of the (B2) component in the cross sections of the adhesive resin layer 15 taken along the TD and MD directions may be measured using the same method as the major axes of the (B1) component in the cross sections of the sealant layer taken along the TD and MD directions.

The adhesive resin layer 15 may contain one or more of various additives, such as various compatible and incompatible elastomers, flame retardants, slip agents, antiblocking agents, antioxidants, photostabilizers, nucleating agents, and tackifiers, as necessary.

When a packaging material includes the adhesive resin layer 15 and the sealant layer 16 like the packaging material 10, they may be laminated by T-die extrusion or blow extrusion of the prepared resin compositions for forming the layers, or by forming a layer and then extruding another layer on top of it, or by bonding the layers produced by T-die extrusion or blow extrusion with an adhesive. The adhesive may be an agent containing acid-modified polypropylene and a hardener (such as isocyanate) for better interface adhesion.

The analysis of resins in the adhesive resin layer 15 and the sealant layer 16 can be performed by a known analytical method such as IR, NMR, any of various mass analyses, X-ray analysis, Raman spectroscopy, GPC, DSC, or DMA.

Preferred embodiments of the power storage device packaging material of the present embodiment have been described in detail so far. However, the present disclosure is not limited to the specific embodiments, and can be modified or changed in various ways within the spirit of the present disclosure recited in the claims.

For example, although Fig. 1 shows a case where the anticorrosion treatment layers 14a and 14b are provided on the two surfaces of the barrier layer 13, it is also possible that only one of the anticorrosion treatment layers 14a and 14b is provided, or no anticorrosion treatment layer is provided. Although Fig. 1 shows a case where the first adhesive layer 12a is provided, the first adhesive layer 12a does not necessarily have to be provided.

Although Fig. 1 shows a case where the sealant layer is a single layer, the sealant layer may have a multilayer structure. If that is the case, the area proportion S1 is a weighted average value obtained by weighting the area proportion of the (B1) component in the cross section along the TD direction of each layer based on the thickness of each layer. The area proportion S2 is a weighted average value obtained by weighting the area proportion of the (B 1) component in the cross section along the MD direction of each layer based on the thickness of each layer.

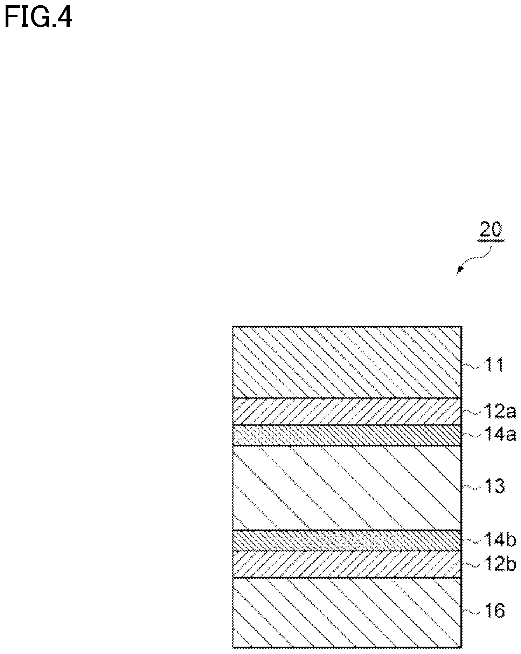

Although Fig. 1 shows the case in which the barrier layer 13 is laminated with the sealant layer 16 using the adhesive resin layer 15, the barrier layer 13 may be laminated with the sealant layer 16 using a second adhesive layer 12b, as in a packaging material for a power storage device 20 shown in Fig. 4. The packaging material preferably has the second adhesive resin layer since this tends to further improve scratch resistance.

### <Second adhesive layer 12b>

The second adhesive layer 12b bonds the barrier layer 13 and the sealant layer 16. A general purpose adhesive for bonding the barrier layer 13 to the sealant layer 16 may be used for the second adhesive layer 12b.

If the anticorrosion treatment layer 14b is provided on the barrier layer 13, and the second anticorrosion treatment layer 14b has a layer containing at least one polymer selected from the group consisting of the cationic polymers and the anionic polymers mentioned above, the second adhesive layer 12b preferably contains a compound having reactivity (hereinafter also referred to as a reactive compound) with the polymer mentioned above contained in the second anticorrosion treatment layer 14b.

For instance, where the second anticorrosion treatment layer 14b contains a cationic polymer, the second adhesive layer 12b preferably contains a compound reactive with the cationic polymer. Where the second anticorrosion treatment layer 14b contains an anionic polymer, the second adhesive layer 12b preferably contains a compound reactive with the anionic polymer. If the second anticorrosion treatment layer 14b contains both a cationic polymer and an anionic polymer, the second adhesive layer 12b preferably contains a compound having reactivity with the cationic polymer and a compound having reactivity with the anionic polymer. However, the second adhesive layer 12b does not necessarily need to contain the two kinds of compounds, but may contain a compound having reactivity with both of the cationic polymer and the anionic polymer. The expression having reactivity refers to forming a covalent bond with a cationic polymer or an anionic polymer. The second adhesive layer 12b may further contain an acid-modified polyolefin resin.

The compound having reactivity with the cationic polymer may be at least one compound selected from the group consisting of a polyfunctional isocyanate compound, a glycidyl compound, a compound having a carboxy group, and a compound having an oxazoline group.

The polyfunctional isocyanate compound, the glycidyl compound, the compound having a carboxy group, or the compound having an oxazoline group may be a polyfunctional isocyanate compound, a glycidyl compound, a compound having a carboxy group, a compound having an oxazoline group, or the like mentioned above, as a crosslinking agent for converting the cationic polymer into a crosslinked structure. In particular, a polyfunctional isocyanate compound is preferable from the perspective of having high reactivity with a cationic polymer and being readily formed into a crosslinked structure.

The compound having reactivity with the anionic polymer may be at least one compound selected from the group consisting of a glycidyl compound, and a compound having an oxazoline group. The glycidyl compound or the compound having an oxazoline group may be a glycidyl compound, a compound having an oxazoline group, or the like, mentioned above, as a crosslinking agent for converting the cationic polymer into a crosslinked structure. Of these compounds, the glycidyl compound is preferable from the perspective of having high reactivity with an anionic polymer.

If the second adhesive layer 12b contains an acid-modified polyolefin resin, it is preferable that the reactive compound is also reactive with the acidic group in the acid-modified polyolefin resin (i.e., forms a covalent bond with the acidic group). Thus, adhesion to the second anticorrosion treatment layer 14b is further enhanced. In addition, the acid-modified polyolefin resin is permitted to have a crosslinked structure to further improve solvent resistance of the packaging material 20.

The content of the reactive compound is preferably 1 to 10 equivalents relative to the acidic group in the acid-modified polyolefin resin. When the content is 1 or more equivalents, the reactive compound sufficiently reacts with the acidic group in the acid-modified polyolefin resin. If the content exceeds 10 equivalents, sufficient saturation is already reached as a crosslinking reaction with the acid-modified polyolefin resin, and therefore unreacted substances may remain and thus various performances may deteriorate. Therefore, for example, the content of the reactive compound is preferably 5 to 20 parts by mass per 100 parts by mass of the acid-modified polyolefin resin (solid content ratio).

The acid-modified polyolefin resin is obtained by introducing an acidic group into a polyolefin resin. Examples of the acidic group include a carboxy group, a sulfonic acid group, and an acid anhydride group. A maleic anhydride group and an (meth)acrylic acid group are particularly preferred. The acid-modified polyolefin resin may be, for example, the same as the modified polyolefin used for the sealant layer 16.

Various additives such as a flame retardant, slip agent, antiblocking agent, antioxidant, light stabilizer, tackifier, or the like may be added to the second adhesive layer 12b.

From the perspective of reducing or preventing deterioration in heat seal strength associated with a corrosive gas such as hydrogen sulfide or electrolyte, and the perspective of further reducing or preventing deterioration in insulation properties, the second adhesive layer 12b may contain, for example, acid-modified polyolefin, and at least one curing agent selected from the group consisting of polyfunctional isocyanate compound, glycidyl compound, compound having a carboxy group, compound having an oxazoline group, and carbodiimide compound. Examples of the carbodiimide compound include N,N'-di-o-tolylcarbodiimide, N,N'-diphenylcarbodiimide, N,N'-di-2,6-dimethylphenylcarbodiimide, N,N'-bis(2,6-diisopropylphenyl) carbodiimide, N,N'-dioctyldecylcarbodiimide, N-tolyl-N'-cyclohexylcarbodiimide, N,N'-di-2,2-di-t-butylphenylcarbodiimide, N-triyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-di-cyclohexylcarbodiimide, and N,N'-di-p-tolylcarbodiimide.

The adhesive used for forming the second adhesive layer 12b may be, for example, a polyurethane adhesive obtained by adding polyester polyol containing hydrogenated dimer fatty acid and diol to polyisocyanate. The adhesive may be, for example, a polyurethane resin prepared by reacting a bifunctional or higher functional isocyanate compound with a base resin such as a polyester polyol, polyether polyol, acrylic polyol, carbonate polyol, or the like; or an epoxy resin prepared by reacting a base resin having an epoxy group with an amine compound or the like. These are preferable for better heat resistance.

The thickness of the second adhesive layer 12b is not particularly limited, but from the perspective of obtaining a desired adhesive strength, processability and the like, the thickness is preferably in the range of 1 µm to 10 µm, and more preferably 2 µm to 7 µm.

### [Method of producing packaging material]

Next, an example of a method of producing the packaging material 10 shown in Fig. 1 will be described. The method of producing the packaging material 10 should not be limited to the methods described below.

The method of producing the packaging material 10 of the present embodiment includes a step of providing the anticorrosion treatment layers 14a and 14b on the barrier layer 13, a step of bonding the substrate layer 11 and the barrier layer 13 using the first adhesive layer 12a, a step of preparing a laminate by further laminating the adhesive resin layer 15 and the sealant layer 16 on the surface of the barrier layer 13 having the anticorrosion treatment layer 14b, and, if necessary, a step of aging the resultant laminate.

### (Step of laminating anticorrosion treatment layers 14a and 14b on barrier layer 13)

In the present step, the anticorrosion treatment layers 14a and 14b are formed on the barrier layer 13. As described above, the method may include applying a degreasing treatment, hydrothermal modification treatment, anodic oxidation treatment, or chemical conversion treatment to the barrier layer 13, or applying a coating agent having an anticorrosion performance onto the barrier layer 13.

If the anticorrosion treatment layers 14a and 14b have a multilayer structure, for example, a coating liquid (coating agent) that serves as a lower layer-side (barrier layer 13-side) anticorrosion treatment layer may be applied to the barrier layer 13, followed by baking to form a first layer, and then, a coating liquid (coating agent) that serves as an upper layer-side anticorrosion treatment layer may be applied to the first layer, followed by baking to form a second layer.

The degreasing treatment may be carried out by spraying or immersion. The hydrothermal modification treatment and anodic oxidation treatment may be carried out by immersion. As for the chemical conversion treatment, immersion, spraying, coating, or the like can be selected as appropriate depending on the type of chemical conversion treatment.

Various methods such as gravure coating, reverse coating, roll coating or bar coating may be used as the method of applying the coating agent that prevents corrosion.

As stated above, such a variety of treatments may be carried out on both surfaces or one surface of the metal foil; with the one-surface treatment, a surface to be treated is preferably at a side on which the sealant layer 16 is to be stacked. If needed, the treatment mentioned above may also be applied to the surface of the substrate layer 11.

The weights of the coating agents for forming the first and second layers are preferably both in the range of 0.005 g/m² to 0.200 g/m², more preferably 0.010 g/m² to 0.100 g/m².

If necessary, dry curing may be carried out within a base material temperature range of 60°C to 300°C depending on the drying conditions of the anticorrosion treatment layers 14a and 14b used.

### (Step of bonding substrate layer 11 and barrier layer 13)

In the present step, the barrier layer 13 provided with the anticorrosion treatment layers 14a and 14b is bonded to the substrate layer 11 via the first adhesive layer 12a. The substrate layer 11 is bonded to the surface of the barrier layer 13 having the anticorrosion treatment layer 14a. The bonding method uses a technique such as dry lamination, non-solvent lamination or wet lamination, and bonds the two layers using the material forming the aforementioned first adhesive layer 12a. The first adhesive layer 12a is preferably provided in the range of 1 g/m² to 10 g/m², and more preferably in the range of 2 g/m² to 7 g/m² in terms of dry coating weight.

### (Step of laminating the adhesive resin layer 15 and the sealant layer 16)

In the present step, the adhesive resin layer 15 and the sealant layer 16 are formed on the surface of the barrier layer 13 having the anticorrosion treatment layer 14b. The method includes using an extrusion laminator to sandwich-laminate the adhesive resin layer 15 and the sealant layer 16 together. Furthermore, it is possible to laminate by a tandem lamination method or a co-extrusion method which extrudes the adhesive resin layer 15 with the sealant layer 16. In the formation of the adhesive resin layer 15 and the sealant layer 16, for example, the components are mixed so as to satisfy the above-described configurations of the adhesive resin layer 15 and the sealant layer 16. The adhesive resin layer 15 is formed using a resin composition for forming the sealant layer containing the above-mentioned constituent components of the adhesive resin layer 15. The sealant layer 16 is formed using a resin composition for forming the sealant layer containing the above-mentioned constituent components of the sealant layer 16.

As shown in Fig. 1, through this step, a laminate can be obtained in which each layer is laminated in the sequence of the substrate layer 11/the first adhesive layer 12a/the first anticorrosion treatment layer 14a/the barrier layer 13/the second anticorrosion treatment layer 14b/the adhesive resin layer 15/the sealant layer 16.

Note that the adhesive resin layer 15 may be laminated by directly extruding dry-blended materials having the above-mentioned material composition using an extrusion laminator. Alternatively, the adhesive resin layer 15 may be laminated by melt-blending the materials using a melt mixing device such as a single-screw extruder, a twin-screw extruder, or a Brabender mixer, granulating the mixture, and extruding the granules using an extrusion laminator.

The area proportions S3 and S4 in the adhesive resin layer 15 are adjusted as appropriate by changing the amount of the (B2) component in the resin composition for forming the adhesive resin layer.

The sealant layer 16 may be laminated using an extrusion laminator to directly extrude dry-blended materials having the material composition mentioned above as the constituent components of the resin composition for forming the sealant laminate. Alternatively, the adhesive resin layer 15 and the sealant layer 16 may be laminated by melt-blending the materials using a melt mixing device such as a single-screw extruder, a twin-screw extruder, or a Brabender mixer, granulating the mixture, and tandem-laminating or co-extruding the adhesive resin layer 15 and the sealant layer 16 using an extrusion laminator. Moreover, a sealant monolayer film may be formed in advance as a cast film using a resin composition for forming a sealant layer, and the film may be laminated by sandwich-lamination together with an adhesive resin. From the perspective of productivity, the forming speed (processing speed) of the adhesive resin layer 15 and the sealant layer 16 can be, for example, 80 m/min or more.

The area proportions S1 and S2 in the sealant layer 16 are adjusted as appropriate by changing the amount of the (B1) component in the resin composition for forming the sealant layer.

### (Step of aging)

In the present step, the laminate is aged (cured). By subjecting the laminate to aging, it is possible to promote the adhesion between the substrate layer 11/the first adhesive layer 12a/the first anticorrosion treatment layer 14a/the barrier layer 13, and the adhesion between the barrier layer 13/the second anticorrosion treatment layer 14b/the second adhesive layer 12b/the sealant layer 16. It is also possible to reduce the area proportions S2 and S4 by subjecting the laminate to aging. The aging temperature may be 80°C or more, 100°C or more, or 120°C or more, and may be 140°C or less, 150°C or less, or 160°C or less. The aging time may be 1 hour or more, 2 hours or more, or 3 hours or more, and may be 24 hours or less, 48 hours or less, or 72 hours or less.

In this manner, there can be produced the packaging material 10 of the present embodiment as shown in Fig. 1.

Next, an example of a method of producing the packaging material 20 shown in Fig. 4 will be described. The method of producing the packaging material 20 is not limited to the following one.

The method of producing the packaging material 20 of the present embodiment includes a step of providing the anticorrosion treatment layers 14a and 14b on the barrier layer 13, a step of bonding the substrate layer 11 and the barrier layer 13 using the first adhesive layer 12a, a step of obtaining a laminate by bonding the sealant layer 16 via the second adhesive layer 12b to the surface of the barrier layer 13 having the anticorrosion treatment layer 14b, and, if necessary, a step of aging the resultant laminate. Steps up to the step of bonding the substrate layer 11 and the barrier layer 13 using the first adhesive layer 12a can be performed in the same manner as in the method of producing the packaging material 10. The step of subjecting the obtained laminate to aging can be carried out in the same manner as in the method of producing the packaging material 10 described above.

### (Step of laminating second adhesive layer 12b and sealant layer 16)

In the present step, a laminate is obtained by bonding the sealant layer 16 to the surface of the barrier layer 13 having the anticorrosion treatment layer 14b via the second adhesive layer 12b. The bonding method may be wet processing, dry lamination, or the like.

If wet processing is used, a solution or a dispersion of the adhesive forming the second adhesive layer 12b is applied onto the anticorrosion treatment layer 14b and the solvent is vaporized at a predetermined temperature, followed by drying, which may be further followed by baking, if necessary, to thereby form a film. Then, the sealant layer 16 is laminated and the packaging material 20 is produced. The coating method may be any of the various coating methods mentioned above. The preferred dry coating weight of the second adhesive layer 12b is the same as that of the first adhesive layer 12a.

In this case, the sealant layer 16 can be produced, for example, by a melt extrusion molding machine using a resin composition for forming the sealant layer that contains the above-mentioned constituent components of the sealant layer 16. The melt extrusion molding machine may have a processing speed of 80 m/min or more from the perspective of productivity.

The power storage device packaging material of the present disclosure can be suitably used as a packaging material for power storage devices including, for example, secondary batteries such as a lithium-ion battery, a nickel hydrogen battery, and a lead storage battery, and electrochemical capacitors such as an electric double layer capacitor. In particular, since the packaging material for a power storage device according to the present disclosure can maintain good heat sealing even when used in a high-temperature environment after being heat-sealed, it can be suitably used as a packaging material for a solid-state battery that uses a solid electrolyte and is expected to be used in such an environment.

### [Power storage device]

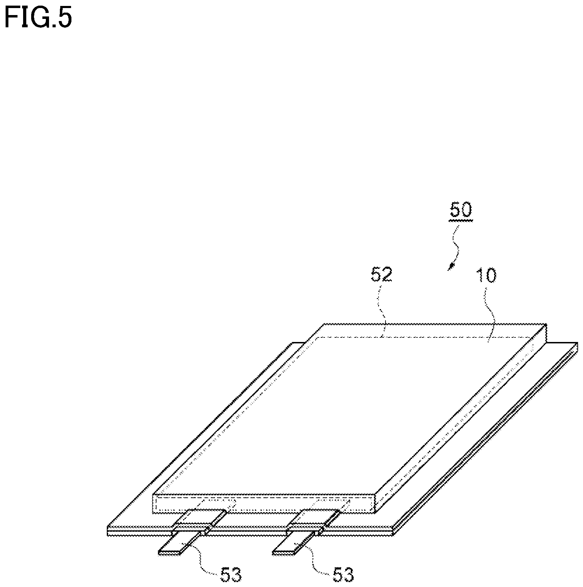

Fig. 5 is a perspective view showing an embodiment of a power storage device prepared using the packaging material described above. As shown in Fig. 5, a power storage device 50 includes a battery element (power storage device main body) 52 including electrodes, two metal terminals (leads, current extraction terminals) 53 extending from the electrodes for extracting current from the battery element 52 to the outside, and the packaging material 10 that houses the battery element 52 and is sealed hermetically. The packaging material 10 is the packaging material 10 according to the present embodiment described above, and is used as a container for housing the battery element 52. In the packaging material 10, the substrate layer 11 is the outermost layer and the sealant layer 16 is the innermost layer. In other words, the packaging material 10 is configured to contain the battery element 52 therein by folding one laminate film in half and heat-sealing the edges thereof, or by stacking two laminate films and heat-sealing the edges thereof, so that the substrate layer 11 is on the external side of the power storage device 50 and the sealant layer 16 is on the internal side of the power storage device 50. The metal terminals 53 are sandwiched and held, and hermetically sealed by the packaging material 10, forming the container with the sealant layer 16 on the inside. The metal terminals 53 may be sandwiched and held by the packaging material 10 via a tab sealant. In the power storage device 50, the packaging material 20 may be used instead of the packaging material 10.

The battery element 52 is formed by providing an electrolyte between a positive electrode and a negative electrode. The metal terminals 53 are parts of a collector extended outside of the packaging material 10, and is made of metal foil such as copper foil or aluminum foil.

The power storage device 50 of the present embodiment may be a solid-state battery. If that is the case, the electrolyte of the battery element 52 is a solid electrolyte such as a sulfide solid electrolyte. Since the power storage device 50 of the present embodiment uses the packaging material 10 of the present embodiment, pressure is applied uniformly to the battery element, which tends to improve the operating efficiency.

### Examples

In the following, the present disclosure will be described in more detail by way of examples. However, the present disclosure should not be limited to them.

### [Materials used]

Materials used in Examples and Comparative Examples are set forth below.

### <Substrate layer (25 µm thickness)>

PET: A polyethylene terephthalate film having one surface subjected to a corona treatment was used.

### <First adhesive layer (with a mass per unit area of 4.0 g/m²)>

An adhesive was used that was prepared by mixing polyester polyol (manufactured by Resonac Holdings Corporation (formerly known as Showa Denko Materials co.,Ltd. under the product name of TL 2505-63, and having a hydroxyl value of 7 to 11 mgKOH/g) and a nurate form of isophorone diisocyanate (manufactured by Mitsui Chemicals, Inc. under the product name of Takenate 600) so that the NCO/OH ratio is 20.0, and diluting the mixture with ethyl acetate to a solid content of 26 mass%.

### <Second adhesive layer (with a mass per unit area of 3.0 g/m²)>

An adhesive prepared by formulating 10 parts by mass (solid content ratio) of a polyisocyanate compound having an isocyanurate structure in 100 parts by mass of acid-modified polyolefin resin dissolved in toluene was used.

### <First anticorrosion treatment layer (substrate layer side) and second anticorrosion treatment layer (sealant layer side)>

(CL-1): A Sodium polyphosphate stabilized cerium oxide sol was used after being adjusted to a solid content concentration of 10 mass% by using distilled water as a solvent. It should be noted that the sodium polyphosphate stabilized cerium oxide sol was obtained by formulating 10 parts by mass of Na salt of phosphoric acid per 100 parts by mass of cerium oxide.
(CL-2): A composition comprising 90 mass% of polyallylamine (manufactured by Nitto Boseki Co., Ltd) and 10 mass% of polyglycerol polyglycidyl ether (manufactured by Nagase Chemtex Corp.) was used after being adjusted to a solid concentration of 5 mass% using distilled water as a solvent.

### <Barrier layer (40 µm thickness)>

AL: Annealed and degreased soft aluminum foil (8079 Material manufactured by Toyo Aluminum K.K.) was used.

### <Adhesive resin layer and sealant layer)

The materials used for the adhesive resin layer and the sealant layer are listed in Table 1 below.

**[Table 1]**

| Component | No. | Manufacturer | Structure |
|---|---|---|---|
| Polypropylene resin (A) | A1 | SunAllomer | Homo PP |
| | A1 | Mitsui Chemicals | Maleic anhydride-modified homo PP |
| Incompatible component (B) | B1 | Japan polyethylene | LDPE |
| | B2 | Mitsui Chemicals | Ethylene copolymer |
| | B3 | | Butene copolymer |
| Mixture of polypropylene resin (A) and incompatible component (B) | AB1 | Mitsui Chemicals | Block PP |

### [Preparation of packaging material]

### (Example 1)

First, the first and second anticorrosion treatment layers were provided on the barrier layer through the following procedure. That is, (CL-1) was applied to both surfaces of the barrier layer by micro gravure coating at a dry coating weight of 70 mg/m², followed by baking at 200°C in a drying unit. Next, (CL-2) was applied to the obtained layer by micro gravure coating at a dry coating weight of 20 mg/m², thereby forming a composite layer of (CL-1) and (CL-2) as first and second anticorrosion treatment layers. The composite layer exhibits anticorrosion performance by compounding two materials (CL-1) and (CL-2).

Next, the surface of the barrier layer with the anticorrosion treatment layers facing the first anticorrosion treatment layer was bonded to the corona-treated surface of the substrate layer using the first adhesive (first adhesive layer) by dry lamination to obtain a first laminate. The barrier layer with the anticorrosion treatment layers and the substrate layer were laminated by applying the first adhesive onto the first anticorrosion treatment layer so that the coating weight (mass per unit area) after drying is 4.0 g/m², drying it at 80°C for 1 minute, and aging it at 80°C for 120 hours after laminating it with the substrate layer.

Then, the first laminate was placed on an unwinding part of an extrusion laminator. The adhesive resin layer and the sealant layer were laminated in this order on the second anticorrosion treatment layer of the first laminate by co-extrusion from a T-die under the processing conditions of 270°C and 80 m/min to obtain a packaging material (a laminate of the substrate layer/the first adhesive layer/the first anticorrosion treatment layer/the barrier layer/the second anticorrosion treatment layer/the adhesive resin layer/the sealant layer). The lamination of the adhesive resin layer and the sealant layer was carried out by dry-blending the various materials shown in Table 2 in advance, and using the mixture for the extrusion lamination described above. The adhesive resin layer and the sealant layer were formed so that they have the thickness values shown in Table 3.

### (Examples 2 to 5)

The first laminate was obtained in the same manner as in Example 1. The adhesive resin layer and the sealant layer were laminated in this order on the second anticorrosion treatment layer of the first laminate in the same manner as in Example 1 to obtain a second laminate. The second laminate was subjected to aging at the temperature and for the time shown in Table 2 to obtain a packaging material.

### [Examples 6 to 12 and Comparative Examples 1 to 3]

Each packaging material was obtained in the same manner as in Example 1, except that the materials shown in Table 2 were used as the materials for the adhesive resin layer and the sealant layer.

### (Examples 13 and 17)

Each packaging material was obtained in the same manner as in Example 3, except that the materials shown in Table 2 were used as the materials for the adhesive resin layer and the sealant layer.

### (Examples 14 to 16)

Each packaging materials was obtained in the same manner as in Example 3, except that the thicknesses of the adhesive resin layer and the sealant layer were changed as shown in Table 3.

### (Example 18)

The first laminate was obtained in the same manner as in Example 1. Subsequently, the sealant layer shown in Table 2 was bonded to the second anticorrosion treatment layer of the first laminate by dry lamination using the second adhesive (second adhesive layer). The first laminate and the sealant layer were laminated by applying an adhesive for forming the second adhesive layer onto the second anticorrosion treatment layer so that the second adhesive layer has a thickness of 3 µm after drying, drying it at 80°C for 1 minute, and aging it at 120°C for 3 hours after laminating it with the sealant layer. The packaging material (a laminate of the substrate layer/first adhesive layer/first anticorrosion treatment layer/barrier layer/second anticorrosion treatment layer/second adhesive layer/sealant layer) was thus obtained.

### [Measurement of area proportion of incompatible component (B)]

### (Examples 1 to 18 and Comparative Examples 1 to 3)

The packaging material obtained of each Example was solidified with resin, and was cut using an ultramicrotome manufactured by Leica to obtain a cross section of the packaging material. The ethylene-propylene copolymer component in the cross section was stained with ruthenium tetroxide at 70°C for 2 to 4 hours. After the staining, platinum was deposited on the cross section. Then, the cross section was observed with a scanning electron microscope (magnification: 2000 times), and an image of the layer to be observed was captured. Observation was carried out at three arbitrary points on the cross section of the layer to be observed. An arbitrary region (10 µm square) was extracted from the image of each of the three points. The extracted region was binarized into a sea component part and island component parts using image processing software (ImageJ), and the proportion of the island component was calculated. Specifically, the extracted region was converted into an 8-bit (256-gradation) image, the gradation serving as the threshold between the sea component part and the island component parts was automatically set, and the area proportion of the island component parts in the extracted region was calculated by binarization. The average of the area proportions at the three points was taken as the area proportion of the incompatible component (B) in the cross section of the layer to be observed. The cross sections of the sealant layer and the adhesive resin layer along the MD and TD directions were observed. The results are shown in Table 3.

### [Evaluation of scratch resistance]

### (Examples 1 to 18 and Comparative Examples 1 to 3)

The packaging material of each Example was subjected to a pencil hardness test. Specifically, the pencil hardness tester specified in JIS K 5600 was used to check how the sealant layer of the packaging material is scratched and measure the pencil hardness. The pencil hardness was evaluated on a scale of five levels, namely, "S", "A", "B", "C", and "D". The results are shown in Table 3.

### [Evaluation criteria]

S: Pencil hardness is 5H or more
A: Pencil hardness is 3H or more and less than 4H
B: Pencil hardness is 2H or more and less than 3H
C: Pencil hardness is H or more and less than 2H
D: Pencil hardness is less than H

**[Table 2]**

| | Aging conditions | Lamination method | Type and amount of material | | | | | | | |
|---|---|---|---|---|---|---|---|---|---|---|
| | | | Sealant layer | | | | Adhesive resin layer | | | |
| | | | PP resin (A) | | Incompatible component (B) | | PP resin (A) | | Incompatible component (B) | |
| | | | Type | Amount [mass%] | Type | Amount [mass%] | Type | Amount [mass%] | Type | Amount [mass%] |
| Ex. 1 | - | Thermal | A1 | 87.5 | B2 | 12.5 | A2 | 75.0 | B2 | 25.0 |
| Ex. 2 | 100°C, 3 h | Thermal | A1 | 87.5 | B2 | 12.5 | A2 | 75.0 | B2 | 25.0 |
| Ex. 3 | 100°C, 12 h | Thermal | A1 | 87.5 | B2 | 12.5 | A2 | 75.0 | B2 | 25.0 |
| Ex. 4 | 100°C, 20 h | Thermal | A1 | 87.5 | B2 | 12.5 | A2 | 75.0 | B2 | 25.0 |
| Ex. 5 | 100°C, 24 h | Thermal | A1 | 87.5 | B2 | 12.5 | A2 | 75.0 | B2 | 25.0 |
| Ex. 6 | - | Thermal | A1 | 90.0 | B2 | 10.0 | A2 | 80.0 | B2 | 20.0 |
| Ex. 7 | - | Thermal | A1 | 90.0 | B2 | 10.0 | A2 | 67.5 | B2 | 32.5 |
| Ex. 8 | - | Thermal | A1 | 90.0 | B2 | 10.0 | A2 | 62.5 | B2 | 37.5 |
| Ex. 9 | - | Thermal | A1 | 90.0 | B2 | 10.0 | A2 | 97.5 | B2 | 2.5 |
| Ex. 10 | - | Thermal | A1 | 95.0 | B2 | 5.0 | A2 | 80.0 | B2 | 20.0 |
| Ex. 11 | - | Thermal | A1 | 80.0 | B2 | 20.0 | A2 | 75.0 | B2 | 25.0 |
| Ex. 12 | - | Thermal | A1 | 86.3 | B1 | 13.8 | A2 | 83.5 | B1 | 16.5 |
| Ex. 13 | 100°C, 12 h | Thermal | AB1 (100 mass%) | | | | A2 | 75.0 | B2 | 25.0 |
| Ex. 14 | 100°C, 12 h | Thermal | A1 | 87.5 | B2 | 12.5 | A2 | 75.0 | B2 | 25.0 |
| Ex. 15 | 100°C, 12 h | Thermal | A1 | 87.5 | B2 | 12.5 | A2 | 75.0 | B2 | 25.0 |
| Ex. 16 | 100°C, 12 h | Thermal | A1 | 87.5 | B2 | 12.5 | A2 | 75.0 | B2 | 25.0 |
| Ex. 17 | 100°C, 12 h | Thermal | A1 | 87.5 | B3 | 12.5 | A2 | 75.0 | B3 | 25.0 |
| Ex. 18 | 100°C, 12 h | Dry | A1 | 87.5 | B2 | 12.5 | - | - | - | - |
| Comp. Ex. 1 | - | Thermal | A1 | 97.5 | B2 | 2.5 | A2 | 70.0 | B2 | 30.0 |
| Comp. Ex. 2 | - | Thermal | A1 | 72.5 | B2 | 27.5 | A2 | 85.0 | B2 | 15.0 |
| Comp. Ex. 3 | - | Thermal | A1 | 100 | - | - | A2 | 100 | - | - |

**[Table 3]**

| | Area proportion | | | | | | | Thickness | | | Evaluation |
|---|---|---|---|---|---|---|---|---|---|---|---|
| | Sealant layer | | | Adhesive resin layer | | | S3/S1 | Sealant layer [µm] | Adhesive resin layer [µm] | Sealant layer/ adhesive resin layer | Scratch resistance |
| | S1 [%] | S2 [%] | S1/S2 | S3 [%] | S4 [%] | S3/S4 | | | | | |
| Ex. 1 | 25 | 25 | 1.0 | 50 | 50 | 1.0 | 2.0 | 53.3 | 26.7 | 2.0 | B |
| Ex. 2 | 25 | 20 | 1.3 | 50 | 45 | 1.1 | 2.0 | 53.3 | 26.7 | 2.0 | A |
| Ex. 3 | 25 | 15 | 1.7 | 50 | 40 | 1.3 | 2.0 | 53.3 | 26.7 | 2.0 | S |
| Ex. 4 | 25 | 10 | 2.5 | 50 | 35 | 1.4 | 2.0 | 53.3 | 26.7 | 2.0 | A |
| Ex. 5 | 25 | 5 | 5.0 | 50 | 30 | 1.7 | 2.0 | 53.3 | 26.7 | 2.0 | B |
| Ex. 6 | 20 | 20 | 1.0 | 40 | 40 | 1.0 | 2.0 | 53.3 | 26.7 | 2.0 | A |
| Ex. 7 | 20 | 20 | 1.0 | 65 | 65 | 1.0 | 3.3 | 53.3 | 26.7 | 2.0 | B |
| Ex. 8 | 20 | 20 | 1.0 | 75 | 75 | 1.0 | 3.8 | 53.3 | 26.7 | 2.0 | C |
| Ex. 9 | 20 | 20 | 1.0 | 5 | 5 | 1.0 | 0.3 | 53.3 | 26.7 | 2.0 | C |
| Ex. 10 | 10 | 10 | 1.0 | 40 | 40 | 1.0 | 4.0 | 53.3 | 26.7 | 2.0 | C |
| Ex. 11 | 40 | 40 | 1.0 | 50 | 50 | 1.0 | 1.3 | 53.3 | 26.7 | 2.0 | C |
| Ex. 12 | 25 | 30 | 0.8 | 30 | 36 | 0.8 | 1.2 | 53.3 | 26.7 | 2.0 | B |
| Ex. 13 | 23 | 15 | 1.7 | 50 | 40 | 1.3 | 2.0 | 53.3 | 26.7 | 2.0 | S |
| Ex. 14 | 25 | 15 | 1.7 | 50 | 40 | 1.3 | 2.0 | 26.7 | 53.3 | 0.5 | A |
| Ex. 15 | 25 | 15 | 1.7 | 50 | 40 | 1.3 | 2.0 | 40.0 | 40.0 | 1.0 | S |
| Ex. 16 | 25 | 15 | 1.7 | 50 | 40 | 1.3 | 2.0 | 70.0 | 10.0 | 7.0 | A |
| Ex. 17 | 20 | 13 | 1.3 | 25 | 20 | 1.2 | 1.3 | 53.3 | 26.7 | 2.0 | A |
| Ex. 18 | 25 | 15 | 1.7 | - | - | - | - | 80.0 | - | - | A |
| Comp. Ex. 1 | 5 | 5 | 1.0 | 60 | 60 | 1.0 | 12.0 | 53.3 | 26.7 | 2.0 | D |
| Comp. Ex. 2 | 55 | 55 | 1.0 | 30 | 30 | 1.0 | 0.5 | 53.3 | 26.7 | 2.0 | D |
| Comp. Ex. 3 | - | - | - | - | - | - | - | 53.3 | 26.7 | 2.0 | D |

The gist of the present disclosure lies in the following [1] to [12].
[1] A packaging material for a power storage device comprising at least a substrate layer, a barrier layer, and a sealant layer in this order, in which
   the sealant layer contains a polypropylene resin (A) and an incompatible component (B) that is incompatible with the polypropylene resin, and,
   when a cross section of the sealant layer taken along a TD direction is observed, the area proportion S1 of the incompatible component (B) in the cross section is 10 to 50%.
[2] The packaging material according to [1], characterized in that, when a cross section of the sealant layer taken along an MD direction is observed, the area proportion S2 of the incompatible component (B) in the cross section is 10 to 40%.
[3] The packaging material according to [2], in which the ratio S1/S2 of the area proportion S1 to the area proportion S2 is greater than 1.
[4] The packaging material according to any on of [1] to [3], further comprising an adhesive resin layer between the barrier layer and the sealant layer, in which
   the adhesive resin layer contains a polypropylene resin (A) and an incompatible component (B) that is incompatible with the polypropylene resin, and,
   when a cross section of the adhesive resin layer taken along the TD direction is observed, an area proportion S3 of the incompatible component (B) in the cross section is 20 to 70%.
[5] The packaging material according to [4], in which, when a cross section of the adhesive resin layer taken along an MD direction is observed, the area proportion S4 of the incompatible component (B) in the cross section is 20 to 60%.
[6] The packaging material according to [5], in which the ratio S3/S4 of the area proportion S3 to the area proportion S4 is greater than 1.
[7] The packaging material according to any one of [4] to [6], in which the ratio S3/S 1 of the area proportion S3 to the area proportion S1 is greater than 1.
[8] The packaging material according to any one of [4] to [7], in which the sealant layer is thicker than the adhesive resin layer.
[9] The packaging material according to any one [1] to [8], in which the incompatible component (B) includes a polyethylene component.
[10] The packaging material according to any one of [1] to [9], in which the packaging material is for a solid-state battery.
[11] A power storage device comprising a power storage device body, and
   the packaging material according to any one of [1] to [10] that houses the power storage device body.
[12] The power storage device according to [11], in which the power storage device is a solid-state battery.

### [Reference Signs List]

10, 20... Packaging material
11 ... Substrate layer
13 ... Barrier layer
15 ... Adhesive resin layer
16 ... Sealant layer
50 ... Power storage device

## Claims

1. A packaging material for a power storage device comprising at least a substrate layer, a barrier layer, and a sealant layer in this order, wherein
the sealant layer contains a polypropylene resin (A) and an incompatible component (B) that is incompatible with the polypropylene resin, and,
when a cross section of the sealant layer taken along a TD direction is observed, an area proportion S1 of the incompatible component (B) in the cross section is 10 to 50%.

2. The packaging material according to claim 1, wherein, when a cross section of the sealant layer taken along an MD direction is observed, an area proportion S2 of the incompatible component (B) in the cross section is 10 to 40%.

3. The packaging material according to claim 2, whrein a ratio S1/S2 of the area proportion S1 to the area proportion S2 is greater than 1.

4. The packaging material according to any one of claims 1 to 3, further comprising an adhesive resin layer between the barrier layer and the sealant layer, wherein
the adhesive resin layer contains a polypropylene resin (A) and an incompatible component (B) that is incompatible with the polypropylene resin, and,
when a cross section of the adhesive resin layer taken along the TD direction is observed, an area proportion S3 of the incompatible component (B) in the cross section is 20 to 70%.

5. The packaging material according to claim 4, wherein, when a cross section of the adhesive resin layer taken along an MD direction is observed, an area proportion S4 of the incompatible component (B) in the cross section is 20 to 60%.

6. The packaging material according to claim 5, wherein a ratio S3/S4 of the area proportion S3 to the area proportion S4 is greater than 1.

7. The packaging material according to any one of claims 4 to 6, wherein a ratio S3/S1 of the area proportion S3 to the area proportion S1 is greater than 1.

8. The packaging material according to any one of claims 4 to 7, wherein the sealant layer is thicker than the adhesive resin layer.

9. The packaging material according to any one 1 to 8, wherein the incompatible component (B) includes a polyethylene component.

10. The packaging material according to any one of claims 1 to 9, wherein the packaging material is for a solid-state battery.

11. A power storage device comprising a power storage device body, and
the packaging material according to any one of claims 1 to 10 that houses the power storage device body.

12. The power storage device according to claim 11, wherein the power storage device is a solid-state battery.
